# EUROPÄISCHE PATENTSCHRIFT

(11) **EP 2 238 321 B1**
(45) Veröffentlichungstag und Bekanntmachung des Hinweises auf die Patenterteilung: **16.03.2016**
(21) Anmeldenummer: 08870880.5
(22) Anmeldetag: 17.12.2008
(51) Int. Cl.: F01N 3/08, F01N 11/00, F02D 41/14

(54) **VERFAHREN UND STEUERGERÄT ZUR ÜBERPRÜFUNG EINES ABGASNACHBEHANDLUNGSSYSTEMS EINES VERBRENNUNGSMOTORS**
METHOD AND CONTROLLER FOR CHECKING AN EXHAUST GAS AFTERTREATMENT SYSTEM OF AN INTERNAL COMBUSTION ENGINE
PROCEDE ET APPAREIL DE COMMANDE POUR CONTROLER UN SYSTEME DE POST-TRAITEMENT DES GAZ D'ECHAPPEMENT D'UN MOTEUR A COMBUSTION INTERNE

(30) Priorität: 14.01.2008 DE 102008004207
(43) Veröffentlichungstag der Anmeldung: 13.10.2010
(73) Patentinhaber: Robert Bosch GmbH, 70442 Stuttgart (DE)
(72) Erfinder: MOLL, Harald, 89079 Ulm-Einsingen (DE); BOUVIER, Damien, 70499 Stuttgart (DE)
(86) Internationale Anmeldenummer: PCT/EP2008/067687
(87) Internationale Veröffentlichungsnummer: WO 2009/089977

(56) Entgegenhaltungen:
- EP-A- 1 247 966
- EP-A- 1 452 713
- EP-A- 1 496 225
- US-A- 5 134 847
- US-A- 5 154 054

## Beschreibung

### Stand der Technik

Die Erfindung betrifft ein Verfahren zur Überprüfung der Funktionsfähigkeit eines Abgasnachbehandlungssystems eines Verbrennungsmotors nach dem Oberbegriff des Anspruchs 1. Die Erfindung betrifft darüber hinaus ein Steuergerät nach dem Oberbegriff des Anspruchs 9. Ein solches Verfahren und ein solches Steuergerät ist jeweils aus der Veröffentlichung "Ottomotor-Management Motronic-Systeme", 1. Ausgabe, April 2003, ISBN-3-7782-2029-2, Seiten 56 bis 58 bekannt.

Ein solches Abgasnachbehandlungssystem weist insbesondere einen Katalysator auf, der zwischen einer ersten Abgassonde und einer zweiten Abgassonde angeordnet ist. Bei dem Katalysator kann es sich um einen NOₓ-Speicherkatalysator handeln. Bei solchen Anordnungen ist es bekannt, abwechselnd oxidierende und reduzierende Abgasatmosphären zu erzeugen. Bei oxidierender Abgasatmosphäre speichert der Katalysator, je nach Katalysatortyp, Sauerstoff und/oder Stickoxide ein. Bei reduzierender Abgasatmosphäre gibt der Katalysator den vorher gespeicherten Sauerstoff als Bestandteil von Wasser und CO₂ wieder ab, wobei die zweite Abgassonde vorübergehend noch eine Luftzahl λ=1 anzeigt. Die zweite Abgassonde zeigt erst dann eine reduzierende Abgasatmosphäre an, wenn der im Katalysator gespeicherte Sauerstoff verbraucht worden ist. Bei oxidierender Abgasatmosphäre zeigt die zweite Abgassonde solange eine Luftzahl λ=1 an, bis das Speichervermögen des Katalysators erschöpft ist. Erst dann zeigt die zweite Abgassonde eine oxidierende Abgasatmosphäre an.

Die erste Abgassonde zeigt einen Wechsel zwischen oxidierender und reduzierender Abgasatmosphäre dagegen ohne solche Verzögerungen an. Die aus den Signalen der ersten und der zweiten Abgassonde ermittelbaren Verzögerungen korrelieren mit dem Speichervermögen des Katalysators. Das Speichervermögen korreliert mit der Funktionsfähigkeit des Katalysators. Daher erlaubt die Erfassung der Zeitverzögerung aus den Signalen der ersten Abgassonde und der zweiten Abgassonde bei einer weitgehend vollständigen Füllung und Leerung des Katalysators im Prinzip eine Beurteilung der Funktionsfähigkeit des Katalysators. Die Dokumente EP1452713 A2 oder US5154054 offenbaren Systeme zur Überwachung der Funktionsfähigkeit eines Abgassystems.

Dabei sind jedoch immer wieder fehlerhafte Beurteilungen aufgetreten. Das heißt, es wurden entweder Katalysatoren, die gesetzliche Vorschriften nicht mehr erfüllten, nicht als defekt erkannt, oder es wurden Katalysatoren, die noch ausreichend funktionsfähig waren, bereits als nicht mehr funktionsfähig beurteilt.

### Offenbarung der Erfindung

Vor diesem Hintergrund besteht die Aufgabe der Erfindung in der Angabe eines Verfahrens und eines Steuergeräts, das jeweils eine zuverlässigere Beurteilung eines Katalysators erlaubt. Diese Aufgabe wird jeweils mit den Merkmalen der unabhängigen Ansprüche gelöst.

Die Erfindung basiert auf der Erkenntnis, dass bei der Reaktion von Abgassonden auf Wechsel zwischen verschiedenen Abgasatmosphären, das heißt zwischen Abgasatmosphären mit verschiedenen Werten der Luftzahl Lambda, auch Verzögerungen auftreten können, die nicht durch Speichervorgänge im Katalysator verursacht werden. Gealterte Abgassonden zeigen den Wechsel z. B. erst verzögert an. Im Ergebnis überlagern sich damit Verzögerungen, die durch den Katalysator bedingt sind, mit Verzögerungen, die durch eine oder beide Abgassonden bedingt sind. Wenn (nur) die zweite Abgassonde verspätet reagiert, verlängert sich die für die Katalysatorbeurteilung auszuwertende Zeitspanne. Dadurch wird der Katalysator im Vergleich zu seiner tatsächlichen Funktionsfähigkeit prinzipiell als besser funktionsfähig beurteilt. Umgekehrt wird der Katalysator prinzipiell als schlechter funktionsfähig beurteilt, wenn (nur) die erste Abgassonde verspätet reagiert.

Die Erfindung erlaubt in diesem Zusammenhang eine Erkennung des Falles, dass eine der beiden Abgassonden verspätet reagiert. Dadurch, dass eine Überprüfung des Katalysators in einem solchen Fall nicht erfolgt, werden die weiter oben genannten fehlerhaften Beurteilungen der Funktionsfähigkeit des Katalysators vermieden.

Bevorzugte Ausgestaltungen erlauben eine Unterscheidung zwischen einer verspätet reagierenden ersten Abgassonde und einer verspätet reagierenden zweiten Abgassonde. Durch die Erkennung einer verspätet reagierenden zweiten Abgassonde können fehlerhaft als zu gut erfolgende Beurteilungen des Katalysators vermieden werden. Durch die Erkennung einer verspätet reagierenden ersten Abgassonde können fehlerhaft als zu schlecht erfolgende Beurteilungen des Katalysators vermieden werden.

Durch eine zusätzliche Ermittlung und Auswertung der Änderungsgeschwindigkeit des Signals der ersten Abgassonde bei einer Abmagerung von einer fetten Abgasatmosphäre zu einer wenigen fetten Abgasatmosphäre kann zusätzlich eine verspätet reagierende erste Abgassonde ohne einen Vergleich mit dem Signal der zweiten Abgassonde erkannt werden. In Verbindung mit dem Vergleich der Reaktion beider Abgassonden hat das den Vorteil, dass auch der Fall, dass beide Abgassonden verspätet reagieren, sicher erkannt werden kann.

Eine Bewertung der Änderungsgeschwindigkeit des Signals der zweiten Abgassonde ist dagegen allein nicht aussagekräftig, da diese Änderungsgeschwindigkeit stark vom Zustand des vor der zweiten Abgassonde angeordneten Katalysators abhängig ist. Eine Bewertung der Änderungsgeschwindigkeit des Signals der ersten Abgassonde bei einer Anfettung von einer mageren Abgasatmosphäre zu einer weniger mageren Abgasatmosphäre ist ebenfalls nicht aussagekräftig, da diese Änderungsgeschwindigkeit stark vom Betriebspunkt des Verbrennungsmotors, das heißt von dem Abgasmassenstrom und dem Wert der Luftzahl λ vor der Anfettung abhängt.

Eine besonders bevorzugte Ausgestaltung zeichnet sich dadurch aus, dass der Katalysator ein NOₓ-Speicherkatalysator ist. NOₓ-Speicherkatalysatoren werden im Betrieb des Kraftfahrzeugs über eine Zeitspanne, deren Länge im Minutenbereich liegt, bei oxidierender Abgasatmosphäre mit Stickoxiden beladen. Anschließend werden sie während einer Zeitspanne, deren Länge im Sekundenbereich liegt, bei reduzierender Abgasatmosphäre regeneriert. Bei der Regeneration wird der Stickstoffanteil der Stickoxide als molekularer Stickstoff und der Sauerstoffanteil der Stickoxide als Bestandteil von Wasser und/oder CO₂ freigesetzt. Die Erfindung kann bei diesem periodisch ablaufenden Wechsel zwischen oxidierender und reduzierender Abgasatmosphäre begleitend durchgeführt werden, ohne dass zusätzliche Eingriffe auf die Luftzahl λ notwendig sind. Die Überprüfung erfolgt daher rein passiv und wirkt sich nicht negativ auf die Abgasemissionen, den Kraftstoffverbrauch und/oder das Fahrverhalten aus.

Weitere Vorteile ergeben sich aus den abhängigen Ansprüchen, der Beschreibung und den beigefügten Figuren.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

### Zeichnungen

Ausführungsbeispiele der Erfindung sind in den Zeichnungen dargestellt und werden in der nachfolgenden Beschreibung näher erläutert. Es zeigen, jeweils in schematischer Form:
- Fig. 1: das technische Umfeld der Erfindung;
- Fig. 2: Verläufe der Luftzahl L über der Zeit t, wie sie zum Beispiel unter verschiedenen Randbedingungen bei der Regeneration eines Speicherkatalysators auftreten; und
- Fig. 3: eine Blockdarstellung einer Signalverarbeitungsstruktur des Steuergeräts, die zur Durchführung eines Ausführungsbeispiels der Erfindung eingerichtet ist.

### Ausführungsform(en) der Erfindung

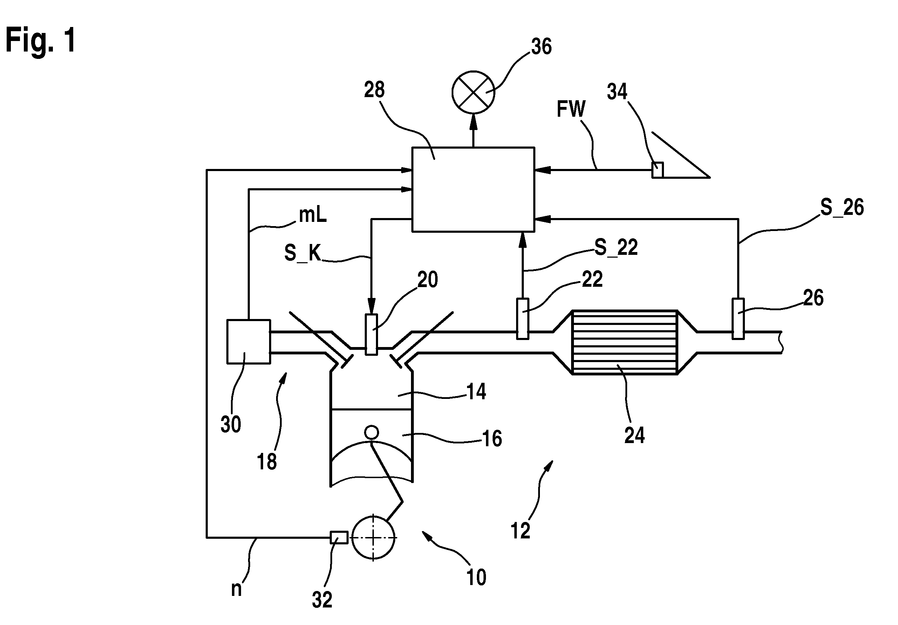

Im Einzelnen zeigt die Figur 1 einen Verbrennungsmotor 10 mit einem Abgasnachbehandlungssystem 12. Die Erfindung ist im Prinzip unabhängig vom Brennverfahren des Verbrennungsmotors 10 einsetzbar. Eine bevorzugte Anwendung wird jedoch bei Dieselmotoren als Verbrennungsmotoren 10 gesehen. Wenigstens ein Brennraum 14 des Verbrennungsmotors 12 wird bei abwärts laufendem Kolben 16 mit Luft aus einem Ansaugsystem 18 gefüllt. Über ein Einspritzventil 20 wird Kraftstoff zu der Füllung des Brennraums mit Luft dosiert. Das resultierende Kraftstoff/Luft-Gemisch wird im Brennraum 16 verbrannt.

Das resultierende Abgas erfährt im Abgasnachbehandlungssystem 12 eine Nachbehandlung zur Konvertierung von Schadstoffen wie CO, HC und NOₓ in Abgasbestandteile wie Wasser, molekularen Stickstoff und CO₂. Das Abgasnachbehandlungssystem 12 weist eine erste Abgassonde 22 auf, die in Strömungsrichtung der Abgase vor einem Katalysator 24 angeordnet ist. Der Katalysator 24 kann ein 3-Wege-Katalysator oder ein NOₓ-Speicherkatalysator sein. Hinter dem Katalysator 24 ist eine zweite Abgassonde 26 angeordnet.

Der Verbrennungsmotor 10 wird von einem Steuergerät 28 gesteuert, das dazu Signale verschiedener Sensoren verarbeitet. In der Ausgestaltung der Figur 1 verarbeitet das Steuergerät 28 insbesondere das Signal mL eines Luftmassenmessers 30, das Signal n eines Drehzahlsensors 32, das Signal FW eines Fahrerwunschgebers 34, das Signal S_22 der ersten Abgassonde 22 und das Signal S_26 der zweiten Abgassonde 26. Aus den Sensorsignalen bildet das Steuergerät 28 insbesondere Stellgrößen zur Ansteuerung wenigstens eines Leistungsstellgliedes des Verbrennungsmotors 10. In der Darstellung der Figur 1 wird dies durch das Signal S_K repräsentiert, mit dem das Steuergerät 28 die Kraftstoffzumessung durch Ansteuerung des Einspritzventils 20 steuert. Darüber hinaus ist das Steuergerät 28 dazu eingerichtet, insbesondere dazu programmiert, die Funktionsfähigkeit des Abgasnachbehandlungssystems 12 nach einem der hier vorgestellten Verfahren zu überprüfen. Wenn bei der Überprüfung eine unzureichende Funktionsfähigkeit des Abgasnachbehandlungssystems 12 erkannt wird, aktiviert das Steuergerät 28 eine Fehlerlampe 36, die den Fahrer des Kraftfahrzeuges über die Fehlfunktion informiert.

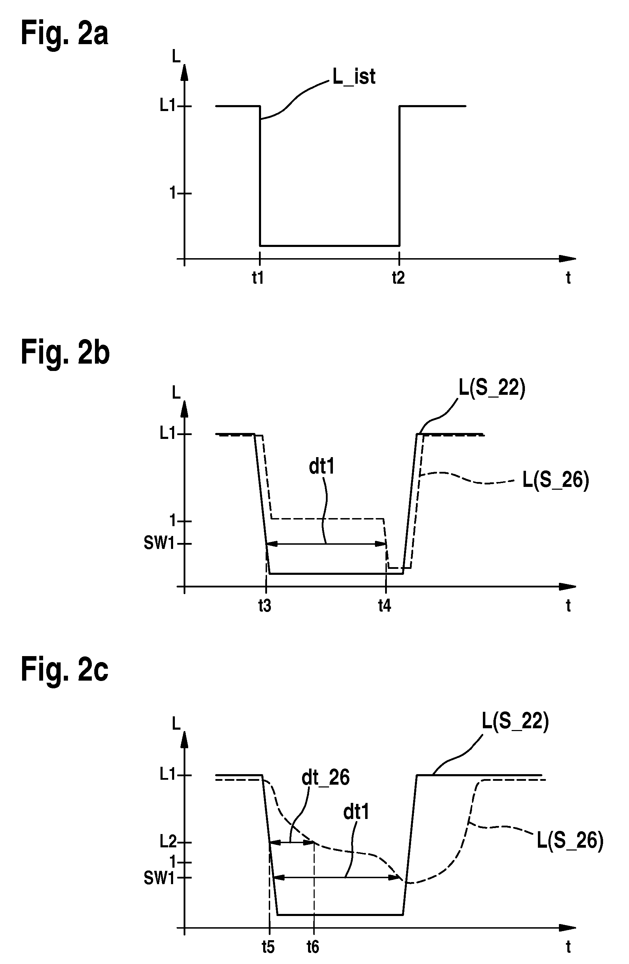

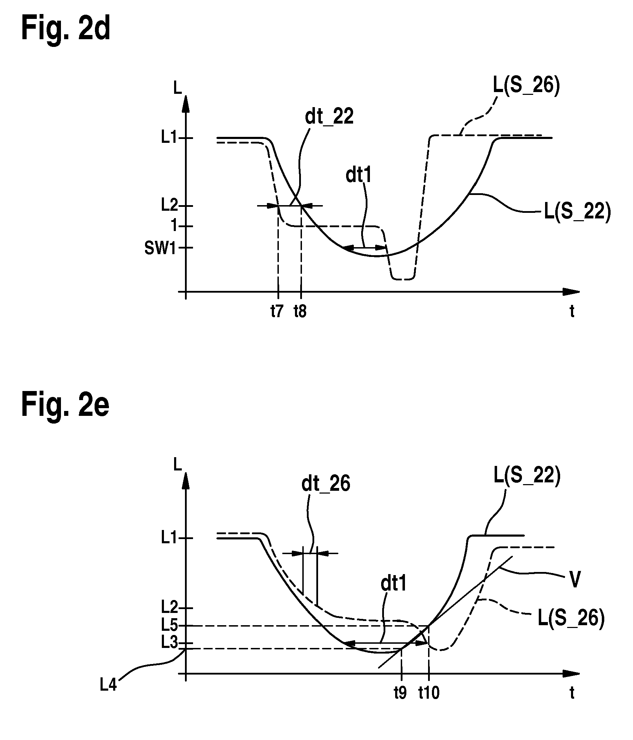

Figur 2 veranschaulicht Verläufe der Luftzahl L über der Zeit t, wie sie zum Beispiel unter verschiedenen Randbedingungen bei der Regeneration eines Speicherkatalysators als Katalysator 24 auftreten. Dabei zeigt die Figur 2a die tatsächliche Luftzahl L in einer Abgasatmosphäre vor dem NOₓ-Speicherkatalysator 24 an. Für Zeitpunkte limks von t1 wird der Verbrennungsmotor 10 mit der Luftzahl L > 1 betrieben. Die Luftzahl L ist bekanntlich als Quotient von zwei Luftmengen definiert. Im Nenner steht die Luftmenge, die theoretisch für eine stöchiometrische Verbrennung einer bestimmten Kraftstoffmenge benötigt wird. Im Zähler steht die tatsächlich an der Verbrennung beteiligte Luftmenge. Luftzahlen L > 1 repräsentieren daher einen Luftüberschuss, während Luftzahlen L < 1 einen Kraftstoffüberschuss repräsentieren. Nach der Figur 2a wird der Verbrennungsmotor 10 zwischen den Zeitpunkten t1 und t2 mit einer Luftzahl L < 1 betrieben. Anschließend, das heißt für Zeitpunkte, die rechts von t2 liegen, wird er wieder mit Luftzahlen L > 1 betrieben. Der Betrieb mit Luftzahlen L > 1 erfolgt für eine Optimierung des Kraftstoffverbrauchs, während der Betrieb mit einer Luftzahl L < 1 zum Beispiel kurzzeitig für eine Regeneration eines Speicherkatalysators als Katalysator 24 erfolgt.

Figur 2b zeigt, wie sich der Verlauf der Luftzahl L_ist aus der Figur 2a bei einem funktionsfähigen NOₓ-Speicherkatalysator 24 und uneingeschränkt funktionsfähigen Abgassonden 22 und 26 in einer Luftzahl L(S_22) und einer Luftzahl L(S_26) abbildet. Dabei ergibt sich die Luftzahl L(S_22) als Funktion des Signals S_22 der ersten Abgassonde 22, während sich die Luftzahl L(S_26) als Funktion des Signals S_26 der zweiten Abgassonde 26 ergibt.

Der Verlauf der Luftzahl L(S_22) bildet mit vernachlässigbarer Verzögerung den Verlauf der tatsächlichen Luftzahl L_ist aus Figur 2a ab. Die Luftzahl L(S_26) fällt dagegen nach dem Zeitpunkt t1 zunächst nur auf den Wert 1 ab. Dieses Verhalten ergibt sich dadurch, dass die reduzierende Abgasatmosphäre zunächst mit dem Sauerstoff reagiert, der vorher in den Katalysator 24 eingelagert worden ist. Erst wenn dieser Sauerstoff nach der Zeitspanne dt1 verbraucht worden ist, ergibt sich auch hinter dem Katalysator 24 eine Luftzahl L(S_26) < 1.

Die Länge der Zeitspanne dt1 ist ein Maß für die Funktionsfähigkeit des Katalysators 24. Der Wert von dt1 nimmt mit abnehmender Funktionsfähigkeit ab. Er wird dadurch erfasst, dass zunächst ein Zeitpunkt t3 erfasst wird, zu dem die Luftzahl L(S_22) einen Schwellenwert SW1 < 1 unterschreitet, anschließend ein Zeitpunkt t4 erfasst wird, zu dem die Luftzahl L(S_26) den Schwellenwert SW1 < 1 unterschreitet, und ferner dt1 als Differenz t4 - t3 gebildet wird. Im Bereich von Luftzahlen L > 1 fallen die Flanken der vor dem Katalysator 24 gemessene Luftzahl L(S_22) und der hinter dem Katalysator 24 erfassten Luftzahl L(S_26) parallel und in einem sehr geringen Zeitabstand ab. Dieses Verhalten ist für uneingeschränkt funktionsfähige Abgassonden 22, 26 typisch. Der geringe Zeitabstand zwischen den fallenden Flanken ergibt sich bereits durch unterschiedliche Laufzeiten des Abgases bis zum jeweiligen Einbauort der Abgassonden 22 und 26 und kann bei der Bestimmung von dt1 vernachlässigt werden.

Figur 2c zeigt die Auswirkungen einer träge reagierenden zweiten Abgassonde 26 bei ansonsten unveränderten Bedingungen. Durch die träge Reaktion unterschreitet die Luftzahl L(S_26) den Schwellenwert SW1 erst vergleichsweise spät. Dadurch verlängert sich dt1 und es besteht daher die Gefahr, dass die Funktionsfähigkeit des Katalysators 24 als besser eingeschätzt wird als sie tatsächlich ist. In einer Ausgestaltung der Erfindung wird dies dadurch verhindert, dass bei fallender Flanke der Luftzahlen L(S_22) und L(S_26), deren Werte noch im Bereich von Luftzahlen > 1 liegen, der Wert einer Zeitspanne dt_26 erfasst wird. Die Zeitspanne dt_26 liegt zwischen den Zeitpunkten t5, t6, zu denen die Signale der beiden Abgassonden 22 und 26 jeweils einen zweiten Luftzahlwert L2 mit L1 > L2 > 1 von oben fallend unterschreiten. Der Wert dt_26 wird als Differenz dt_26 = t6 - t5 gebildet und mit einem Schwellenwert verglichen. Eine Überprüfung der Funktionsfähigkeit des Katalysators 24 erfolgt dann nicht, wenn der Wert der Zeitspanne dt_26 größer als der Schwellenwert ist.

Figur 2d zeigt die Auswirkungen einer träge reagierenden ersten Abgassonde 22. In diesem Fall unterschreitet die Luftzahl L(S_22) erst vergleichsweise spät den Schwellenwert SW1. Als Folge verkürzt sich die Zeitspanne dt1. Daher besteht die Gefahr, dass die Funktionsfähigkeit des Katalysators 24 als schlechter beurteilt wird als sie tatsächlich ist. Um dies zu verhindern, wird ein Zeitabstand dt_22 = t8 - t7 zwischen den Zeitpunkten t7 und t8 erfasst, zu denen die Luftzahlen L(S_26) und L(S_22) einem Luftzahlwert L2 mit L1 > L2 > 1 entsprechen. Auch hier erfolgt eine Überprüfung einer Funktionsfähigkeit des Katalysators 24 dann nicht, wenn der Wert der Zeitspanne dt_22 größer als ein Schwellenwert ist.

Figur 2e zeigt einen Fall, bei dem beide Abgassonden 22, 26 träge reagieren. Wie Figur 2e im Vergleich mit Figur 2b zeigt, kann es auch in diesem Fall zu einer Veränderung der Zeitspanne dt1 kommen. Daher besteht auch in diesem Fall die Gefahr, dass die Funktionsfähigkeit des Katalysators 24 falsch beurteilt wird. Im Unterschied zu den Fällen der Figuren 2c und 2d lässt sich der Fall der Figur 2e, bei dem beide Sonden träge reagieren, nicht zuverlässig aus den Verläufen der fallenden Flanken der Luftzahlen L(S_22) und L(S_26) im Bereich von Luftzahlen L > 1 erkennen, weil die Zeit dt_26 zwischen den Zeitpunkten, zu denen die Luftzahlen L(S_22) und L(S_26) den Wert L2 unterschreiten, vergleichsweise kurz ist.

Zur Abhilfe sieht eine Ausgestaltung der Erfindung vor, die Luftzahl L von einem vierten Wert L4 < 1 auf einen fünften Wert L5 mit L4 > L5 > 1 zu vergrößern, eine bei der Vergrößerung auftretende Änderungsgeschwindigkeit des Signals S_22 der ersten Abgassonde 22 oder der darauf basierenden Luftzahl L(S_22) zu erfassen und mit einem weiteren Schwellenwert zu vergleichen. Die Funktionsfähigkeit des Katalysators 24 wird dann nicht überprüft, wenn der Wert der Zeitspanne dt_26 kleiner als der zugehörige Schwellenwert ist und der weitere Schwellenwert ebenfalls nicht überschritten wird.

Wie bereits weiter oben ausgeführt wurde, basiert diese Ausgestaltung auf der Erkenntnis, dass gerade die steigende Flanke der Luftzahl L(S_22), die vor dem Katalysator 24 erfasst wird, eine Beurteilung der Änderungsgeschwindigkeit und damit der Trägheit des Sondensignals erlaubt. Die fallenden Flanken sind dagegen stark von Betriebspunkten des Verbrennungsmotors abhängig und eignen sich daher nicht für eine zuverlässige Bestimmung der Änderungsgeschwindigkeit. Das gilt sowohl für die fallende Flanke des Signals S_22 der ersten Abgassonde 22 als auch für die fallende Flanke des Signals S_26 der zweiten Abgassonde 26.

Die steigende Flanke des Signals S_26 der zweiten Abgassonde 26 hat gegenüber einer Bewertung der Änderungsgeschwindigkeit im Signal S_22 der ersten Abgassonde 22 bei der steigenden Flanke den Nachteil, dass sie von dem Zustand des Katalysators 24 abhängig ist.

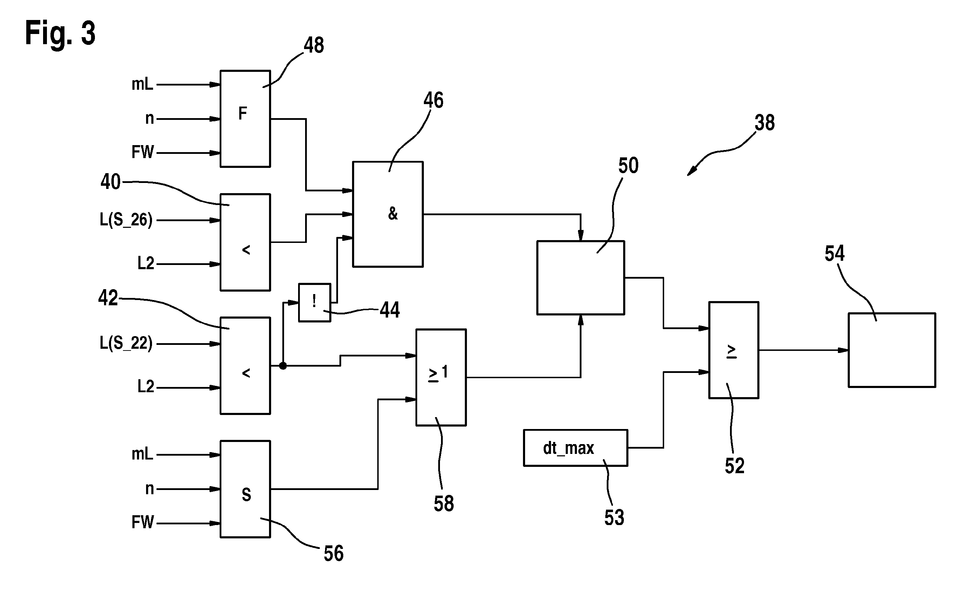

Figur 3 zeigt eine Blockdarstellung einer Signalverarbeitungsstruktur 38 des Steuergeräts 28, die zur Durchführung eines Ausführungsbeispiels der Erfindung eingereicht ist. Die Figur 3 offenbart damit sowohl Verfahrensaspekte als auch Vorrichtungsaspekte der vorliegenden Erfindung.

Die Signalverarbeitungsstruktur 38 dient zur Erkennung der Situation, die in der Figur 2d dargestellt ist. Als Eingangssignale verarbeitet die Signalverarbeitungsstruktur 38 Signale S_22, S_26 der Abgassonden 22 und 26 und/oder entsprechende Luftzahlwerte L(S_22), L(S_26) und Werte der Luftmasse mL und/oder der Drehzahl n und/oder des Fahrerwunsches FW. Die Auswertung von mL, n und FW erfolgt dabei für eine Bildung von Steuerbits F, S, mit denen die Signalverarbeitung freigegeben (F = 1) und/oder abgebrochen (S = 1) werden. Die Signalverarbeitung wird in einer bevorzugten Ausgestaltung beim Vorliegen hinreichend konstanter Werte der Luftmasse mL und der Drehzahl n und/oder beim Vorliegen hinreichend konstanter Werte des Fahrerwunsches FW und der Drehzahl n freigegeben (F = 1) und bei nicht hinreichend konstanten Werten dieser Betriebsparameter abgebrochen (S = 1).

Im Block 40 wird die Luftzahl L(S_26) mit dem Schwellenwert L2 verglichen. Im Block 42 wird die Luftzahl L(S_22) mit dem Schwellenwert L2 verglichen. Block 44 repräsentiert eine Negation. Die Und-Verknüpfung 46 liefert dann eine logische Eins, wenn das im Block 48 gebildete Steuerbit F = 1 ist (Freigabebedingungen erfüllt), L(S_26) den Schwellenwert L2 unterschreitet und L(S_26) den Schwellenwert L2 noch nicht unterschritten hat. Dies ist bei der Figur 2d zum Zeitpunkt t7 der Fall. Die vom Und-Glied 46 ausgegebene logische Eins startet einen Zeitzähler 50, der die Zeitspanne dt_22 erfasst. Der aktuelle Wert der Zeitspanne dt_22 wird im Block 52 mit einem Schwellenwert dt_max verglichen, der durch den Block 53 bereitgestellt wird.

Wenn dt_22 den Schwellenwert dt_max überschreitet, zeigt dies eine träge erste Abgassonde 22 an und die Beurteilung der Funktionsfähigkeit des Katalysators 24 wird durch Übergabe einer logischen Eins an den Block 54 gesperrt. Der Zeitzähler 50 wird gestoppt, wenn L(S_22) den Schwellenwert L2 unterschreitet oder eine Abbruchbedingung (S = 1) erfüllt wird, die im Block 56 gebildet wird. Die genannte Oder-Verknüpfung der Abbruchbedingung S mit dem Ergebnis des Vergleichs aus dem Block 42 erfolgt in der Oder-Verknüpfung 58.

Eine träge zweite Abgassonde 26 wird mit der Signalverarbeitungsstruktur 38 detektiert, wenn man die Blöcke 40 und 42 vertauscht.

Zur Bestimmung der Änderungsgeschwindigkeit der Luftzahl L(S_22) oder des Signals S_22 der ersten Abgassonde 22 beim erneuten Abmagern zwischen den Luftzahlen L4 und L5 in Figur 2e werden die Zeitpunkte t9, t10 erfasst, zu denen jeweils der Wert L4, L5 erreicht wird. Aus den Werten der Luftzahlen L4, L5 und der Zeitpunkte t9, t10 ergibt sich auf bekannte Weise die Steigung der Gerade v in Figur 2e, die ein Maß für die Änderungsgeschwindigkeit darstellt.

Das beschriebene Verfahren und/oder eine seiner Ausgestaltungen wird bei einem Abgasnachbehandlungssystem 12 mit einem NOₓ-Speicherkatalysator 24 bevorzugt parallel zu einer Regeneration des NOx-Speicherkatalysators durchgeführt, für die eine Verringerung der Luftzahl Lambda von einem Wert > 1 auf einen Wert < 1 und eine anschließende Vergrößerung der Luftzahl Lambda von einem Wert < 1 auf einen Wert > 1 erfolgt. Dadurch können die beschriebenen Prüfungen rein passiv begleitend zu der Regeneration durchgeführt werden, so dass die Prüfungen keine zusätzlichen Eingriffe in die Luftzahl der Lambda des Verbrennungsmotors 10 erfordern. Die Prüfungen können daher insbesondere abgasneutral durchgeführt werden.

Bei der Regeneration werden die Zeitspannen dt_26 und/oder dt_22 bevorzugt bei der Verringerung der Luftzahl Lambda, also bei einer Anfettung, und die Änderungsgeschwindigkeit v bei der Vergrößerung der Luftzahl Lambda, also bei einer anschließend erfolgenden erneuten Abmagerung erfasst.

Der zweite Lambdawert L2 liegt bevorzugt zwischen 1,06 und 1,02 und/oder der fünfte Lambdawert L5 liegt bevorzugt zwischen 0,92 und 0,96.

## Patentansprüche

1. Verfahren zur Überprüfung der Funktionsfähigkeit eines in einem Abgasnachbehandlungssystem (12) eines Verbrennungsmotors (10) enthaltenen Katalysators (24) durch Auswertung von Signalen (S_22, S_26) einer ersten Abgassonde (22) und einer zweiten Abgassonde (S_26), zwischen denen der Katalysator (24) angeordnet ist, **dadurch gekennzeichnet, dass** die Luftzahl L einer Abgasatmosphäre, die durch das Abgasnachbehandlungssystem (12) strömt, von einem ersten Lambdawert L1 > 1 über einen zweiten Lambdawert L2 mit L1 > L2 > 1 auf einen dritten Lambdawert L3 mit L2 > L3 verringert wird, der Wert einer Zeitspanne (dt_26; dt_22) erfasst wird, die zwischen Zeitpunkten (t5, t6; t7, t8) liegt, zu denen die Signale (S_26, S_22) der beiden Abgassonden (26, 22) jeweils den zweiten Wert L2 anzeigen, der Wert der Zeitspanne (dt_26; dt_22) mit einem Schwellenwert (dt_max) verglichen wird und dass die normalerweise vorgesehene Überprüfung der Funktionsfähigkeit des Katalysators (24) ausnahmsweise nicht erfolgt, wenn der Wert der Zeitspanne (dt_26; dt_22) größer als der Schwellenwert (dt_max) ist.

2. Verfahren nach Anspruch 1, **dadurch gekennzeichnet, dass** überprüft wird, ob die erste Abgassonde (22) den zweiten Lambdawert L2 zeitlich vor der zweiten Abgassonde (26) anzeigt und die Zeitspanne (dt_26) größer als der Schwellenwert (dt_max) ist.

3. Verfahren nach Anspruch 1, **dadurch gekennzeichnet, dass** überprüft wird, ob die zweite Abgassonde (26) den zweiten Lambdawert L2 zeitlich vor der ersten Abgassonde (22) anzeigt und die Zeitspanne (dt_22) größer als der Schwellenwert (dt_max) ist.

4. Verfahren nach Anspruch 1, **dadurch gekennzeichnet, dass** die Luftzahl von einem vierten Lambdawert L4 < 1 auf einen fünften Lambdawert L5 mit L4<L5<1 vergrößert wird, eine bei der Vergrößerung auftretende Änderungsgeschwindigkeit des Signals (S_22) der ersten Abgassonde (22) erfasst wird und mit einem weiteren Schwellenwert verglichen wird, und dass dann, wenn der Wert der Zeitspanne (dt_26; dt_22) aus Anspruch 1 kleiner als der zugehörige Schwellenwert (dt_max) ist und der weitere Schwellenwert nicht überschritten wird, eine Überprüfung der Funktionsfähigkeit des Katalysators (24) ebenfalls nicht erfolgt.

5. Verfahren nach einem der vorhergehenden Ansprüche, **dadurch gekennzeichnet, dass** der Katalysator (24) ein NOx-Speicherkatalysator ist.

6. Verfahren nach Anspruch 5, **dadurch gekennzeichnet, dass** es bei einer Regeneration des NOx-Speicherkatalysators durchgeführt wird, für die eine Verringerung der Luftzahl Lambda von einem Wert > 1 auf einen Wert < 1 und eine anschließende Vergrößerung der Luftzahl Lambda von einem Wert < 1 auf einen Wert > 1 erfolgt.

7. Verfahren nach Anspruch 6, **dadurch gekennzeichnet, dass** die Zeitspanne (dt_26; dt_22) bei der Verringerung und dass die Änderungsgeschwindigkeit bei der Vergrößerung erfasst wird.

8. Verfahren nach einem der vorhergehenden Ansprüche, **dadurch gekennzeichnet, dass** der zweite Lambdawert (L2) zwischen 1,06 und 1,02 und/oder der fünfte Lambdawert (L5) zwischen 0,92 und 0,96 liegt.

9. Steuergerät (28) eines Verbrennungsmotors (10), der ein Abgasnachbehandlungssystem (12) mit einer ersten Abgassonde (22), einer zweiten Abgassonde (26) und einem zwischen beiden Abgassonden (22, 26) angeordneten Katalysator (24) aufweist, wobei das Steuergerät (28) dazu eingerichtet ist, die Funktionsfähigkeit des im Abgasnachbehandlungssystem (12) enthaltenen Katalysators (24) durch Auswertung von Signalen (S_22, S_26) der ersten Abgassonde (22) und der zweiten Abgassonde (26) zu überprüfen, **dadurch gekennzeichnet, dass** das Steuergerät (28) dazu eingerichtet ist, die Luftzahl Lambda einer Abgasatmosphäre, die durch das Abgasnachbehandlungssystem (12) strömt, von einem ersten Lambdawert L1 > 1 über einen zweiten Lambdawert L2 mit L1> L2>1 auf einen dritten Lambdawert L3 mit L2>L3 zu verringern und den Wert einer Zeitspanne (dt_26; dt_22) zu erfassen, die zwischen Zeitpunkten (t5, t6; t7, t8) liegt, zu denen die Signale (S_26, S_22) der beiden Abgassonden (26, 22) jeweils den zweiten Wert L2 anzeigen, den Wert der Zeitspanne (dt_26; dt_22) mit einem Schwellen-wert (dt_max) zu vergleichen und dass die Überprüfung der Funktionsfähigkeit des Katalysators (24) ausnahmsweise nicht vorgesehen ist, wenn der Wert der Zeitspanne (dt_26; dt_22) größer als der Schwellenwert (dt_max) ist.

10. Steuergerät (28) nach Anspruch 9, **dadurch gekennzeichnet, dass** es dazu eingerichtet ist, ein Verfahren nach einem der Ansprüche 2 bis 8 durchzuführen und/oder seinen Ablauf zu steuern.

## Claims

1. Method for checking the functional capability of a catalytic converter (24) contained in an exhaust gas aftertreatment system (12) of an internal combustion engine (10) by evaluating signals (S_22, S_26) of a first exhaust gas probe (22) and a second exhaust gas probe (S_26) between which the catalytic converter (24) is arranged, **characterized in that** the air ratio (L) of an exhaust gas atmosphere which flows through the exhaust gas aftertreatment system (12) is reduced from a first lambda value L1 > 1 via a second lambda value L2 where L1 > L2 > 1 to a third lambda value L3 where L2 > L3, the value of a time period (dt_26; dt_22) which occurs between points in time (t5, t6; t7, t8) at which the signals (S_26, S_22) of the two exhaust gas probes (26, 22) each indicate the second value L2 is detected, the value of the time period (dt_26; dt_22) is compared with a threshold value (dt_max), and **in that** the normally provided checking of the functional capability of the catalytic converter (24) exceptionally does not take place if the value of the time period (dt_26; dt_22) is greater than the threshold value (dt_max).

2. Method according to Claim 1, **characterized in that** it is checked whether the first exhaust gas probe (22) indicates the second lambda value L2 before the second exhaust gas probe (26) and the time period (dt_26) is greater than the threshold value (dt_max).

3. Method according to Claim 1, **characterized in that** it is checked whether the second exhaust gas probe (26) indicates the second lambda value L2 before the first exhaust gas probe (22) and the time period (dt_22) is greater than the threshold value (dt_max).

4. Method according to Claim 1, **characterized in that** the air ratio is increased from a fourth lambda value L4 < 1 to a fifth lambda value L5 where L4 < L5 < 1, a rate of change of the signal (S_22) of the first exhaust gas probe (22) which occurs during the increase is detected and is compared with a further threshold value, and **in that** if the value of the time period (dt_26; dt_22) from Claim 1 is smaller than the associated threshold value (dt_max) and the further threshold value is not exceeded the functional capability of the catalytic converter (24) is not checked either.

5. Method according to one of the preceding claims **characterized in that** the catalytic converter (24) is an NOx storage-type catalytic converter.

6. Method according to Claim 5, **characterized in that** said method is carried out during a regeneration of the NOx storage-type catalytic converter, for which regeneration a reduction in the air ratio lambda from a value > 1 to a value < 1 and a subsequent increase in the air ratio lambda from a value < 1 to a value > 1 take place.

7. Method according to Claim 6, **characterized in that** the time period (dt_26; dt_22) is detected during the reduction, and **in that** the rate of change is detected during the increase.

8. Method according to one of the preceding claims, **characterized in that** the second lambda value (L2) is between 1.06 and 1.02 and/or the fifth lambda value (L5) is between 0.92 and 0.96.

9. Control device (28) of an internal combustion engine (10) which has an exhaust gas aftertreatment system (12) with a first exhaust gas probe (22), a second exhaust gas probe (26) and a catalytic converter (24) which is arranged between the two exhaust gas probes (22, 26), wherein the control device (28) is configured to check the functional capability of the catalytic converter (24) contained in the exhaust gas aftertreatment system (12) by evaluating signals (S_22, S_26) of the first exhaust gas probe (22) and of the second exhaust gas probe (26), **characterized in that** the control device (28) is configured to reduce the air ratio lambda of an exhaust gas atmosphere which flows through the exhaust gas aftertreatment system (12) from a first lambda value L1 > 1 via a second lambda value L2 where L1 > L2 > 1 to a third lambda value L3 where L2 > L3 and to detect the value of a time period (dt_26; dt_22) which occurs between points in time (t5, t6; t7, t8) at which the signals (S_26, S_22) of the two exhaust gas probes (26, 22) each indicate the second value L2, to compare the value of the time period (dt_26; dt_22) with a threshold value (dt_max), and **in that** the checking of the functional capability of the catalytic converter (24) is exceptionally not provided if the value of the time period (dt_26; dt_22) is greater than the threshold value (dt_max).

10. Control device (28) according to Claim 9, **characterized in that** said control device (28) is configured to carry out a method according to one of Claims 2 to 8 and/or to control its operation sequence.

## Revendications

1. Procédé pour contrôler le bon fonctionnement d'un catalyseur (24) contenu dans un système de post-traitement des gaz d'échappement (12) d'un moteur à combustion interne (10) par évaluation de signaux (S_22, S_26) d'une première sonde de gaz d'échappement (22) et d'une deuxième sonde de gaz d'échappement (S_26) entre lesquelles est disposé le catalyseur (24), **caractérisé en ce que** l'indice d'air L d'une atmosphère de gaz d'échappement, qui s'écoule à travers le système de post-traitement des gaz d'échappement (12), est réduit d'une première valeur Lambda L1 > 1 en passant par une deuxième valeur Lambda L2 avec L1 > L2 > 1 à une troisième valeur Lambda L3 avec L2 > L3, la valeur d'un espace de temps (dt_26 ; dt_22) est saisie, qui se situe entre des moments (t5, t6; t7, t8) auxquels les signaux (S_26, S_22) des deux sondes de gaz d'échappement (26, 22) indiquent respectivement la deuxième valeur L2, la valeur de l'espace de temps (dt_26; dt_22) est comparée à une valeur de seuil (dt_max) et **en ce que** le contrôle normalement prévu du bon fonctionnement du catalyseur (24) n'a exceptionnellement pas lieu, si la valeur de l'espace de temps (dt_26; dt_22) est supérieure à la valeur de seuil (dt_max).

2. Procédé selon la revendication 1 **caractérisé en ce qu'**on vérifie si la première sonde de gaz d'échappement (22) indique la deuxième valeur Lambda L2 en fonction du temps avant la deuxième sonde de gaz d'échappement (26) et l'espace de temps (dt_26) est supérieur à la valeur de seuil (dt_max).

3. Procédé selon la revendication 1 **caractérisé en ce qu'**on vérifie, si la deuxième sonde de gaz d'échappement (26) indique la deuxième valeur Lambda L2 en fonction du temps avant la première sonde de gaz d'échappement (22) et l'espace de temps (dt_22) est supérieur à la valeur de seuil (dt_max).

4. Procédé selon la revendication 1 **caractérisé en ce que** l'indice d'air est augmenté d'une quatrième valeur Lambda L4 < 1 à une cinquième valeur Lambda L5 avec L4 < L5 < 1, une vitesse de modification du signal (S_22) de la première sonde de gaz d'échappement (22) se produisant lors de l'augmentation est saisie et est comparée à une autre valeur de seuil et **en ce qu'**ensuite, un contrôle du bon fonctionnement du catalyseur (24) n'a également pas lieu, si la valeur de l'espace de temps (dt_26; dt_22) selon la revendication 1 est inférieure à la valeur de seuil correspondante (dt_max) et si l'autre valeur de seuil n'est pas dépassée.

5. Procédé selon l'une quelconque des revendications précédentes **caractérisé en ce que** le catalyseur (24) est un catalyseur de stockage/déstockage de Noₓ.

6. Procédé selon la revendication 5 **caractérisé en ce qu'**il est effectué lors d'une régénération du catalyseur de stockage/déstockage de Noₓ pour laquelle ont lieu une réduction de l'indice d'air Lambda d'une valeur > 1 à une valeur < 1 et une augmentation ultérieure de l'indice d'air Lambda d'une valeur < 1 à une valeur > 1.

7. Procédé selon la revendication 6 **caractérisé en ce que** l'espace de temps (dt_26; dt_22) est saisi lors de la réduction et **en ce que** la vitesse de modification est saisie lors de l'augmentation.

8. Procédé selon l'une quelconque des revendications précédentes **caractérisé en ce que** la deuxième valeur Lambda (L2) se situe entre 1,06 et 1,02 et/ou la cinquième valeur Lambda (L5) entre 0,92 et 0,96.

9. Appareil de commande (28) d'un moteur à combustion interne (10), qui comporte un système de post-traitement des gaz d'échappement (12) avec une première sonde de gaz d'échappement (22), une deuxième sonde de gaz d'échappement (26) et un catalyseur (24) disposé entre les deux sondes de gaz d'échappement (22, 26), pour lequel l'appareil de commande (28) est agencé de manière à contrôler le bon fonctionnement du catalyseur (24) contenu dans le système de post-traitement de gaz d'échappement (12) par évaluation des signaux (S_22, S_26) de la première sonde de gaz d'échappement (22) et de la deuxième sonde de gaz d'échappement (26) **caractérisé en ce que** l'appareil de commande (28) est agencé de manière à réduire l'indice d'air Lambda d'une atmosphère de gaz d'échappement qui s'écoule à travers le système de post-traitement de gaz d'échappement (12), d'une première valeur Lambda L1 > 1 en passant par une deuxième valeur Lambda L2 avec L1 > L2 > 1 à une troisième valeur Lambda L3 avec L2 > L3 et à saisir la valeur d'un espace de temps (dt_26; dt_22), qui se situe entre les moments (t5, t6; t7, t8) auxquels les signaux (S_26, S_22) des deux sondes de gaz d'échappement (26, 22) indiquent respectivement la deuxième valeur L2, à comparer la valeur de l'espace de temps (dt_26; dt_22) à une valeur de seuil (dt_max) et **en ce que** le contrôle du bon fonctionnement du catalyseur (24) n'est exceptionnellement pas prévu, si la valeur de l'espace de temps (dt_26; dt_22) est supérieure à la valeur de seuil (dt_max).

10. Appareil de commande (28) selon la revendication 9 **caractérisé en ce qu'**il est agencé de manière à exécuter un procédé selon l'une quelconque des revendications 2 à 8 et/ou à commander son déroulement.
